# EUROPEAN PATENT SPECIFICATION

(11) **EP 2 075 457 B1**
(45) Date of publication and mention of the grant of the patent: **18.09.2019**
(21) Application number: 08254066.7
(22) Date of filing: 18.12.2008
(51) Int. Cl.: F02P 5/02, F02P 5/04

(54) **Engine control device, engine control method, and motorcycle**
Motorsteuerungsvorrichtung, Motorsteuerungsverfahren und Motorrad
Dispositif de contrôle de moteur, procédé de contrôle de moteur, et motocyclette

(30) Priority: 27.12.2007 JP 2007336687
(43) Date of publication of application: 01.07.2009
(73) Proprietor: Yamaha Hatsudoki Kabushiki Kaisha, Iwata-shi, Shizuoka 438-8501 (JP)
(72) Inventor: Nakagawa, Yoshitomi, Iwata-shi Shizuoka-ken 438-8501 (JP)
(74) Representative: Grünecker Patent- und Rechtsanwälte PartG mbB

(56) References cited:
- JP-A- S63 124 867
- JP-A- 2006 207 565
- JP-A- 2006 274 998
- US-A- 6 009 865
- US-A1- 2003 041 847

## Description

### Technical Field

The present invention relates to a reverse revolution preventing control device of an engine, a method for reverse revolution preventing control of an engine, and a motorcycle.

### Background Art

It is conventionally known that an engine can be reversely revolved by an increased gas pressure in a combustion chamber, in particular, when the number of revolutions of the engine is low.

As for this problem, in an ignition control device of an engine described in JP 2006 207565 A, the reverse revolution of the engine is prevented by forcibly causing a misfire when the number of revolutions of the engine is lower than a threshold value determined according to the present load of the engine. Moreover, according to this device, the threshold value of the number of revolutions of the engine at which the misfire is caused is determined according to the load of the engine, so that to forcibly cause a useless misfire can be prevented. A value of a throttle sensor, for example, is used as the load of the engine.

Moreover, from JP S63 124867 A, an engine control device is known which sets the ignition timing in accordance with an operative condition, and corrects the ignition timing to a delay timing side when a throttle opening is positioned in an opening side. A throttle control means controls the opening of a throttle means on the basis of the throttle opening and closing characteristic predetermined in accordance with an accelerator control amount.

A value of a throttle sensor, that is, a throttle opening relates to a present gas pressure in a combustion chamber and correlates to some extent with the reverse revolution of the engine. However, it is difficult to determine whether a throttle opening will decrease or increase in the future by the value of the throttle sensor. In a state where the throttle opening will decrease in the future and in a state where the throttle opening will increase in the future, even if the number of revolutions of the engine is the same, the probability that the engine will be reversely revolved can be thought to be different. However, an ignition control device in the related art does not consider a difference in the probability between the two states and hence does not necessarily predict the reverse revolution of the engine correctly.

The present invention seeks to provide a reverse revolution preventing control device of an engine, a method for reverse revolution preventing control of an engine, and a motorcycle that can correctly predict a state where an engine will be reversely revolved and which can perform an ignition control of the engine according to the result of prediction.

### Summary

To solve the above-mentioned problems, a reverse revolution preventing control device of an engine according to the present invention comprises: an engine revolution cycle information acquisition means for acquiring a revolution cycle of an engine; an accelerator opening sensor for detecting an opening of an accelerator operated by a rider of a vehicle mounted with the engine; a throttle opening control means for controlling an opening of a throttle of the engine on the basis of the opening of the accelerator, the revolution cycle of the engine, the output of a water temperature sensor for detecting the temperature of the cooling water of the engine, and the output of an atmospheric pressure sensor for detecting the atmospheric pressure; and an ignition control means which is configured to compare a specified reverse revolution threshold value determined from the opening of the accelerator with a present revolution cycle of the engine, and to limit the ignition at a crank position before a compression top dead center when the present revolution cycle of the engine is the reverse revolution threshold value or more by stopping ignition in that combustion cycle or causing ignition at the timing when the piston is positioned at the compression dead center or later than that timing.

Moreover, a motorcycle according to the present invention comprises the above-mentioned reverse revolution preventing control device. Furthermore, a method for reverse revolution preventing control of an engine according to the present invention comprises the steps of:
acquiring a revolution cycle of an engine; detecting an opening of an accelerator operated by a rider of a vehicle mounted with the engine; controlling an opening of a throttle of the engine on the basis of the opening of the accelerator, the revolution cycle of the engine, the output of a water temperature sensor for detecting the temperature of the cooling water of the engine, and the output of an atmospheric pressure sensor for detecting the atmospheric pressure; and comparing a specified reverse revolution threshold value determined from the opening of the accelerator with a present revolution cycle of the engine, and limiting the ignition at a crank position before a compression top dead center when the present revolution cycle of the engine is the reverse revolution threshold value or more by stopping ignition in that combustion cycle or causing ignition at the timing when the piston is positioned at the compression top dead center or later than that timing.

In an embodiment, the opening of the throttle is controlled on the basis of the opening of the accelerator and the other information. For this reason, the opening of the accelerator is estimated to greatly relate to a future opening of the throttle, that is, a future gas pressure in the combustion chamber. In an embodiment, ignition in a combustion chamber at the crank position before the compression top dead center is limited according to the opening of the accelerator, so that a state where the engine will be reversely revolved can be correctly estimated and ignition control of the engine can be performed according to the result of estimation.

### Brief Description of the Drawings

Embodiments of the present invention will be described hereinafter, by way of example only, with reference to the accompanying drawings.
Fig. 1 is a diagram to show the external appearance of a motorcycle according to an embodiment of the present invention.
Fig. 2 is a construction diagram of a reverse revolution preventing control device of an engine of the motorcycle according to the embodiment of the present invention.
Fig. 3 is a flow chart to show an ignition control processing.
Fig. 4 is a diagram to show one example of a table to show a relationship between an accelerator opening and a reverse revolution threshold value.

### Detailed Description

Hereinafter, an embodiment of the present invention will be described in detail with reference to the accompanying drawings.

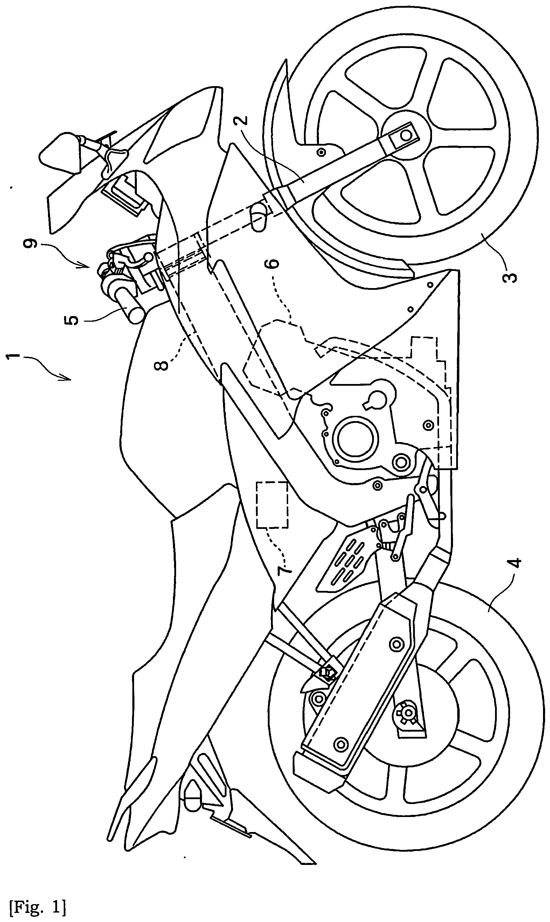

Fig. 1 is a diagram to show the external appearance of a motorcycle mounted with a reverse revolution preventing control device of an engine according to an embodiment of the present invention. As shown in the drawing, in this motorcycle 1, an engine 6 is suspended by a main frame 8 extending rearward and downward of a head pipe for supporting a front fork 2 in such a way as to freely steer the front fork 2. The output of the engine 6 is transmitted to a rear wheel 4 by a chain. The front fork 2 supports a front wheel 3 turnably and has a steering handlebar 9 fixed to its top portion. The steering handlebar 9 has an accelerator grip 5 fixed to its right end portion. A rider can operate the direction of the front wheel 3 by the use of the steering handlebar 9 and can adjust the ou put of the engine 6 by turning the accelerator grip 5.

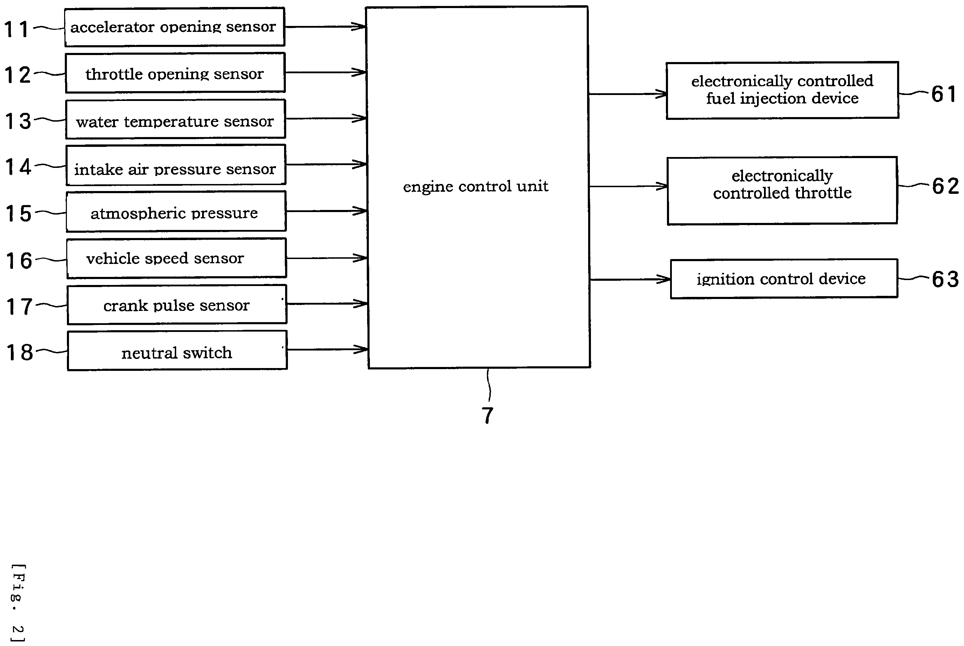

Fig. 2 is a construction diagram of the engine control device of the motorcycle I. As shown in the drawing, the engine control device of the motorcycle I is mainly constructed of an engine control unit 7 constructed of one or plural microprocessors. This engine control unit 7 performs a control program stored previously in a ROM to realize an engine control according to this embodiment.

The motorcycle 1 is provided with: an accelerator opening sensor 11 for detecting the amount of operation (amount of turn) of the
accelerator grip 5, that is, an accelerator opening; a throttle opening sensor 12 for detecting the opening of a throttle of the engine 6 (an electronically controlled throttle 62 to be described later); a water temperature sensor 13 for detecting the temperature of the cooling water of the engine 6; an intake air pressure sensor 14 for detecting pressure in an intake pipe; an atmospheric pressure sensor 15 for detecting the atmospheric pressure; a vehicle speed sensor 16 for detecting the running speed of the motorcycle 1; a crank pulse sensor 17 for detecting a crank pulse produced according to the revolution of the crankshaft of the engine 6; and a neutral switch 18 for detecting whether or not the transmission of the engine 6 is in a neutral state. The detection results of these detection devices are inputted to the engine control unit 7. The accelerator opening sensor 11 may be disposed in the base portion of the accelerator grip 5 or may be disposed in a position separate from the accelerator grip 5 and connected to the accelerator grip 5 by a mechanical wire cable.

Moreover, in this embodiment, the engine 6 is provided with an electronically controlled fuel injection device 61, an electronically controlled throttle 62, and an ignition control device 63. The engine control unit 7 supplies these devices with a control signal on the basis of the detection results of the respective detection devices.

The electronically controlled fuel injection device 61 electronically controls the amount of fuel in an air-fuel mixture to be supplied to the combustion chamber of the engine 6. The engine control unit 7 determines a fuel injection quantity on the basis of the outputs of the throttle opening sensor 12, the atmospheric pressure sensor 15, and the water temperature sensor 13 and supplies the electronically controlled fuel injection device 61 with a control signal so as to supply the fuel injection quantity. The electronically controlled throttle 62 is a throttle the opening of which can be freely controlled by a DC motor according to the control signal from the engine control unit 7. The engine control unit 7 determines a final throttle opening fundamentally on the basis of a three-dimensional map in which the output of the accelerator opening sensor 11, the revolution cycle of the engine 6 (that is information to show the revolution speed of the engine 6 and which may be replaced by the number of revolutions (the number of revolutions per unit time)) determined from the output of the crank pulse sensor 17, and the throttle opening are related to each other, and further on the basis of the outputs of the water temperature sensor 13 and the atmospheric pressure sensor 15. The engine control unit 7 supplies the electronically controlled throttle 62 with a control signal so as to realize the determined opening. Moreover, when it is determined from the neutral switch 18 that the transmission of the engine 6 is in a neutral state, the engine control unit 7 controls the electronically controlled throttle 62 so as to realize a throttle opening suitable for idling. The ignition control device 63 is a device to control an ignition timing when the air-fuel mixture in the combustion chamber is ignited by an ignition plug of the engine 6. The engine control unit 7 determines timing when a piston is positioned at a compression top dead center, that is, a basic ignition timing on the basis of the outputs of the intake air pressure sensor 14 and the crank pulse sensor 17. Further, the engine control unit 7 advances or delays an actual ignition timing according to the engine revolution cycle and the like. In this embodiment, to prevent the crankshaft of the engine 6 from being reversely revolved, the engine control unit 7 compares a specified reverse revolution threshold value with the present engine revolution cycle and limits the ignition at an advance position when the present engine revolution cycle_is the reverse revolution threshold value or more. Specifically, for example, the engine control unit 7 stops ignition in that combustion cycle or causes ignition at the timing when the piston is positioned at the compression top dead center or later than that timing.

Further, in this embodiment, this reverse revolution threshold value is determined from the accelerator opening detected by the accelerator opening sensor 11. In this embodiment, as described above, the throttle opening is controlled on the basis of the accelerator opening and the other information. For this reason, the accelerator opening is estimated to greatly relate to a future throttle opening, that is, a future gas pressure in the combustion chamber. Thus, in this embodiment, the reverse revolution threshold value is determined in the following manner: that is₂ as the accelerator opening detected by the accelerator opening sensor 11 becomes larger, the reverse revolution threshold value becomes smaller; contrarily, as the accelerator opening becomes smaller, the reverse revolution threshold value becomes larger. With this, when the accelerator opening is large and hence the future load of the engine 6 is estimated to be large, it is possible to limit advance ignition even if the engine revolution cycle is comparatively short. Contrarily, when the accelerator opening is small and hence the future load of the engine 6 is estimated to be small, it is possible to limit the advance ignition only when the engine revolution cycle is long. In this regard, when the number of revolutions of the engine 6 is used as the information of the revolution speed cycle, it suffices that the reverse threshold value to be compared with the number of revolutions is determined in the following manner: that is, as the accelerator opening detected by the accelerator opening sensor 11 becomes larger, the reverse threshold value becomes larger; contrarily, as the accelerator opening becomes smaller, the reverse threshold value becomes smaller.

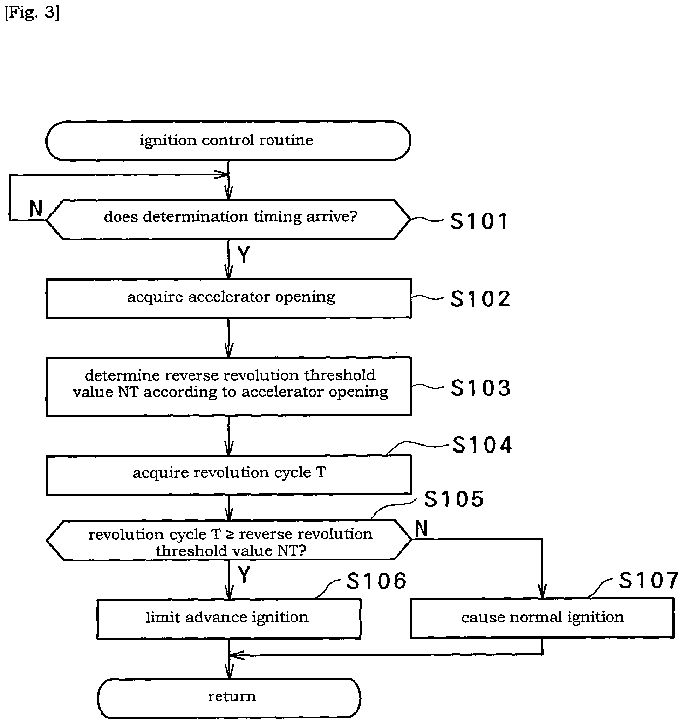

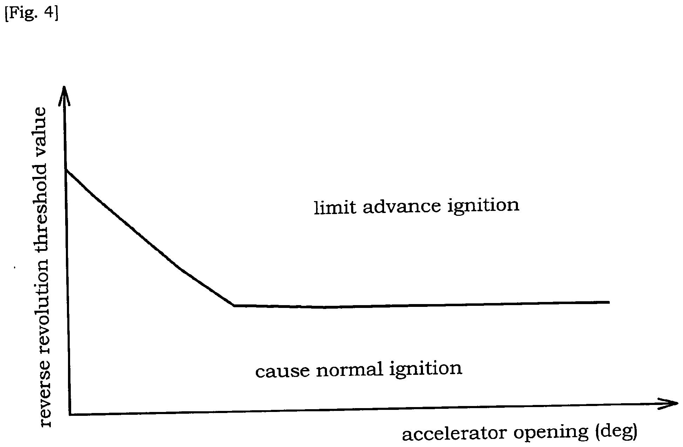

Fig. 3 is a flow chart to show the processing of an ignition control by the engine control unit 7. As shown in the drawing, the engine control unit 7 monitors the arrival of an ignition determination timing according to the outputs of the crank pulse sensor 17 and the intake air pressure sensor 14 (S101). For example, it suffices that the timing when the crankshaft is positioned at a position by a specified angle before the position of the crankshaft where the piston of the engine 6 is positioned at the compression top dead center is made the ignition determination timing. Next, the engine control unit 7_acquires the accelerator opening from the accelerator opening sensor 11 (S102) and determines a reverse revolution threshold value NT according to this accelerator opening (S103). It suffices that if the accelerator opening is a specified threshold value or more, the reverse revolution threshold value NT is made a specified value NT1 and that if the accelerator opening is less than the specified threshold value, the reverse revolution threshold value NT is made a specified value NT2 (NT1 < NT2). Alternatively, as shown in Fig. 4, it is also recommendable to previously store a table to show a relationship between the accelerator opening and the reverse revolution value, that is, a relationship in which as the accelerator opening becomes larger, the reverse revolution threshold value gradually becomes smaller, in the memory and to acquire the reverse revolution threshold value corresponding to the present accelerator opening with reference to this table.

Next, the engine control unit 7 computes a revolution cycle T (time required for the crankshaft of the engine 6 to revolute one revolution) according to the output of the crank pulse sensor 17 (S104) and compares this value with the reverse revolution threshold value NT determined in S103 (S105). If the revolution cycle T is the reverse revolution threshold value NT or more, the advance ignition of the engine 6 is limited (S106). This can be realized, as described above, by stopping igniting the engine 6, or by igniting the engine 6 at the timing when the piston is positioned at the compression top dead center or a fixed timing later than the timing. Moreover, if the revolution cycle T is less than the reverse revolution threshold value NT, the engine 6 is normally ignited (S 107). The timing of igniting the engine 6 normally, as described above, is determined, for example, on the basis of the revolution cycle (revolution speed) of the engine 6.

According to this embodiment, the state where the engine 6 is reversely revolved can be correctly predicted, and the ignition control of the engine 6 can be performed according to the prediction result. In other word, in this embodiment, the throttle opening is controlled on the basis of not only the accelerator opening but also the other information such as the cooling water temperature. For this reason, the accelerator opening greatly relates to the future throttle opening, that is, the future gas pressure in the combustion chamber of the engine 6. Thus, in this embodiment, the threshold value to limit the ignition in the combustion chamber at the position of the crankshaft before the compression top dead center is determined not by the throttle opening but by the accelerator opening. In this manner, the state where the engine 6 is reversely revolved can be correctly predicted, and the ignition control of the engine 6 can be performed according to the prediction result. Description of the Reference Numerals
- 1-: motorcycle
- 2-: front fork
- 3-: front wheel
- 4-: rear wheel
- 5-: accelerator grip
- 6-: engine
- 7-: engine control unit
- 8-: main frame
- 9-: steering handlebar
- 11-: accelerator opening sensor
- 12-: throttle opening sensor
- 13-: water temperature sensor
- 14-: intake air pressure sensor
- 15-: atmospheric pressure sensor
- 16-: vehicle speed sensor
- 17-: crank pulse sensor
- 18-: neutral switch
- 61-: electronically controlled fuel injection device
- 62-: electronically controlled throttle
- 63-: ignition control device

## Claims

1. A reverse revolution preventing control device of an engine (6), comprising:
an engine revolution cycle information acquisition means for acquiring a revolution cycle (T) of an engine (6);
an accelerator opening sensor (11) for detecting an opening of an accelerator operated by a rider of a vehicle mounted with the engine (6); and
a throttle opening control means (12) for controlling an opening of a throttle (62) of the engine (6) on the basis of the opening of the accelerator, the revolution cycle (T) of the engine (6), the output of a water temperature sensor (13) for detecting the temperature of the cooling water of the engine (6), and the output of an atmospheric pressure sensor (15) for detecting the atmospheric pressure,
**characterized by** further comprising:
an ignition control means (63) which is configured to compare a specified reverse revolution threshold value (NT) determined from the opening of the accelerator with a present revolution cycle (T) of the engine (6), and to limit the ignition at a crank position before a compression top dead center when the present revolution cycle (T) of the engine (6) is the reverse revolution threshold value (NT) or more by stopping ignition in that combustion cycle or causing ignition at the timing when the piston is positioned at the compression top dead center or later than that timing.

2. The reverse revolution preventing control device of an engine (6) as claimed in claim 1, wherein the ignition control means (63) is configured to determine that the reverse revolution threshold value (NT) is a specified first or second value (NT1, NT2) according to a comparison between the opening of the accelerator and a specified accelerator opening threshold value.

3. The reverse revolution prevention control device of an engine (6) as claimed in claim 1, wherein the ignition control means (63) is configured to determine the reverse revolution threshold value (NT) according to a map to show a relationship between the opening of the accelerator and the reverse revolution threshold value (NT).

4. A motorcycle (1) comprising the reverse revolution preventing control device of an engine (6) as claimed in any one of claims 1 to 3.

5. A method for reverse revolution preventing control of an engine (6), comprising the steps of:
acquiring a revolution cycle (T) of an engine (6);
detecting an opening of an accelerator operated by a rider of a vehicle mounted with the engine (6); and
controlling an opening of a throttle (62) of the engine (6) on the basis of the opening of the accelerator, the revolution cycle of the engine (6), the output of a water temperature sensor (13) for detecting the temperature of the cooling water of the engine (6), and the output of an atmospheric pressure sensor (15) for detecting the atmospheric pressure,
**characterized by** further comprising the steps of:
comparing a specified reverse revolution threshold value (NT) determined from the opening of the accelerator with a present revolution cycle (T) of the engine (6), and limiting the ignition at a crank position before a compression top dead center when the present revolution cycle (T) of the engine (6) is the reverse revolution threshold value (NT) or more by stopping ignition in that combustion cycle or causing ignition at the timing when the piston is positioned at the compression top dead center or later than that timing.

## Patentansprüche

1. Steuervorrichtung zum Verhindern einer Rückwärtsdrehung eines Motors (6), umfassend:
eine Informationserfassungseinrichtung eines Motorumdrehungszyklus zum Erfassen eines Umdrehungszyklus (T) eines Motors (6);
einen Gaspedalöffnungssensor (11) zum Erfassen einer Öffnung eines Gaspedals, das von einem Fahrer eines mit dem Motor (6) ausgestatteten Fahrzeuges betätigt wird; und
eine Steuereinrichtung einer Drosselklappenöffnung (12) zum Kontrollieren einer Öffnung einer Drosselklappe (62) des Motors (6) auf Basis von der Öffnung des Gaspedals, dem Umdrehungszyklus (T) des Motors (6), dem Output eines Wassertemperatursensors (13) zum Erfassen einer Temperatur des Kühlwassers des Motors (6), und dem Output eines Atmosphärendrucksensors (15) zum Erfassen des atmosphärischen Druckes,
**dadurch gekennzeichnet, dass** sie weiterhin umfasst:
eine Zündsteuereinrichtung (63), die konfiguriert ist, einen vorgegebenen Rückwärtsdrehungsschwellenwert (NT), der aus der Öffnung des Gaspedales bestimmt wird, mit einem gegenwärtigen Umdrehungszyklus (T) des Motors (6) zu vergleichen, und die Zündung an einer Kurbelposition zu begrenzen, vor einem oberen Totpunkt der Verdichtung, wenn der gegenwärtige Umdrehungszyklus (T) des Motors (6) gleich dem Rückwärtsdrehungsschwellenwert (NT) oder mehr ist, indem die Zündung in diesem Verbrennungszyklus gestoppt wird oder indem die Zündung zu dem Zeitpunkt veranlasst wird, an dem der Kolben an dem oberen Totpunkt der Kompression positioniert wird, oder später als dieser Zeitpunkt.

2. Steuervorrichtung zum Verhindern einer Rückwärtsdrehung eines Motors (6) nach Anspruch 1,
wobei die Zündsteuereinrichtung (63) konfiguriert ist, um zu bestimmen, dass der Rückwärtsdrehungsschwellenwert (NT) ein vorgegebener erster oder zweiter Wert (NT1, NT2) gemäß einem Vergleich zwischen der Gaspedalöffnung und einem vorgegebenen Gaspedalöffnungsschwellenwert ist.

3. Steuervorrichtung zum Verhindern einer Rückwärtsdrehung eines Motors (6) nach Anspruch 1,
wobei die Zündsteuereinrichtung (63) konfiguriert ist, den Rückwärtsdrehungsschwellenwert (NT) gemäß einem Kennfeld zu bestimmen, um einen Zusammenhang zwischen der Gaspedalöffnung und dem Rückwärtsdrehungsschwellenwert (NT) zu zeigen.

4. Motorrad (1) mit der Steuervorrichtung zum Verhindern einer Rückwärtsdrehung eines Motors (6) nach einem der Ansprüche 1 bis 3.

5. Verfahren für die Rückwärtsdrehungsverhinderungssteuerung eines Motors (6), umfassend die folgenden Schritte:
Erfassen eines Umdrehungszyklus (T) eines Motors (6);
Erfassen einer Öffnung eines Gaspedals, das von einem Fahrer eines mit dem Motor (6) ausgestatteten Fahrzeuges betätigt wird;
Kontrollieren einer Öffnung einer Drosselklappe (62) des Motors (6) auf der Basis von der Öffnung des Gaspedals, dem Umdrehungszyklus (T) des Motors (6), dem Output eines Wassertemperatursensors (13) zum Erfassen einer Temperatur des Kühlwassers des Motors (6), und dem Output eines Atmosphärendrucksensors (15) zum Erfassen des atmosphärischen Druckes,
**dadurch gekennzeichnet, dass** es weiterhin die folgenden Schritte umfasst:
Vergleichen eines vorgegebenen Rückwärtsdrehungsschwellenwerts (NT), der aus der Öffnung des Gaspedales bestimmt wird, mit einem gegenwärtigen Umdrehungszyklus (T) des Motors (6), und Begrenzen der Zündung an einer Kurbelposition, vor einem oberen Totpunkt der Verdichtung, wenn der gegenwärtige Umdrehungszyklus (T) des Motors (6) gleich dem Rückwärtsdrehungsschwellenwert (NT) oder mehr ist, indem die Zündung in diesem Verbrennungszyklus gestoppt wird oder indem die Zündung zu dem Zeitpunkt veranlasst wird, an dem der Kolben an dem oberen Totpunkt der Kompression positioniert wird, oder später als dieser Zeitpunkt.

## Revendications

1. Dispositif de contrôle de prévention de révolution inverse d'un moteur (6), comprenant :
un moyen d'acquisition d'information de cycle de révolution de moteur pour acquérir un cycle de révolution (T) d'un moteur (6) ;
un capteur d'ouverture d'accélérateur (11) pour détecter l'ouverture d'un accélérateur actionné par le conducteur d'un véhicule équipé du moteur (6) ; et
un moyen de contrôle d'ouverture d'accélérateur (12) pour contrôler l'ouverture d'un régulateur de vitesse (62) du moteur (6) sur base de l'ouverture de l'accélérateur, du cycle de révolution (T) du moteur (6), de la sortie d'un capteur de température d'eau (13) pour détecter la température de l'eau de refroidissement du moteur (6), et de la sortie d'un capteur de pression atmosphérique (15) pour détecter la pression atmosphérique,
**caractérisé en ce qu'**il comprend en outre :
un moyen de contrôle d'allumage (63) qui est configuré pour comparer une valeur seuil de révolution inverse spécifiée (NT) déterminée à partir de l'ouverture de l'accélérateur avec un cycle de révolution actuel (T) du moteur (6), et pour limiter l'allumage à une position de manivelle avant un point mort haut de compression quand le cycle de révolution actuel (T) du moteur (6) est supérieur ou égal à la valeur seuil de révolution inverse (NT) en arrêtant l'allumage dans ce cycle de combustion ou en commandant l'allumage au moment où le piston est positionné au point mort haut de compression ou après ce moment.

2. Dispositif de contrôle de prévention de révolution inverse d'un moteur (6) selon la revendication 1,
dans lequel le moyen de contrôle d'allumage (63) est configuré pour déterminer que la valeur seuil de révolution inverse (NT) est une première ou une deuxième valeur spécifiée (NT1, NT2) conformément à une comparaison entre l'ouverture de l'accélérateur et une valeur seuil d'ouverture d'accélérateur spécifiée.

3. Dispositif de contrôle de prévention de révolution inverse d'un moteur (6) selon la revendication 1,
dans lequel le moyen de contrôle d'allumage (63) est configuré pour déterminer la valeur seuil de révolution inverse (NT) conformément à une table montrant la relation entre l'ouverture de l'accélérateur et la valeur seuil de révolution inverse (NT).

4. Motocyclette (1) comprenant le dispositif de contrôle de prévention de révolution inverse d'un moteur (6) selon l'une quelconque des revendications 1 à 3.

5. Procédé de contrôle de prévention de révolution inverse d'un moteur (6), comprenant les étapes suivantes :
acquisition du cycle de révolution (T) d'un moteur (6) ;
détection de l'ouverture d'un accélérateur actionné par le conducteur d'un véhicule équipé du moteur (6) ; et
contrôle de l'ouverture d'un régulateur de vitesse (62) du moteur (6) sur base de l'ouverture de l'accélérateur, du cycle de révolution du moteur (6), de la sortie d'un capteur de température d'eau (13) pour détecter la température de l'eau de refroidissement du moteur (6), et de la sortie d'un capteur de pression atmosphérique (15) pour détecter la pression atmosphérique,
**caractérisé en ce qu'**il comprend en outre les étapes suivantes :
comparaison d'une valeur seuil de révolution inverse spécifiée (NT) déterminée à partir de l'ouverture de l'accélérateur avec un cycle de révolution actuel (T) du moteur (6), et limitation de l'allumage à une position de manivelle avant un point mort haut de compression quand le cycle de révolution actuel (T) du moteur (6) est supérieur ou égal à la valeur seuil de révolution inverse (NT) en arrêtant l'allumage dans ce cycle de combustion ou en commandant l'allumage au moment où le piston est positionné au point mort haut de compression ou après ce moment.
